(19) Europäisches Patentamt
European Patent Office
Office européen des brevets

(11) **EP 4 300 621 A1**

(12) **EUROPEAN PATENT APPLICATION**
published in accordance with Art. 153(4) EPC

(43) Date of publication:
**03.01.2024 Bulletin 2024/01**

(21) Application number: **22759193.0**

(22) Date of filing: **24.01.2022**

(51) International Patent Classification (IPC):
*H01M 4/133* (2010.01)        *H01M 4/134* (2010.01)
*H01M 4/136* (2010.01)        *H01M 4/1393* (2010.01)
*H01M 4/1397* (2010.01)       *H01M 4/36* (2006.01)
*H01M 4/58* (2010.01)         *H01M 4/587* (2010.01)
*H01M 4/62* (2006.01)

(52) Cooperative Patent Classification (CPC):
**H01M 4/133; H01M 4/134; H01M 4/136;
H01M 4/1393; H01M 4/1397; H01M 4/36;
H01M 4/58; H01M 4/587; H01M 4/62;** Y02E 60/10

(86) International application number:
**PCT/JP2022/002362**

(87) International publication number:
**WO 2022/181151 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021   JP 2021028512**

(71) Applicant: **Panasonic Intellectual Property
Management Co., Ltd.
Osaka-shi, Osaka 540-6207 (JP)**

(72) Inventors:
• **HIRANO Nobuhiro
Kadoma-shi, Osaka 571-0057 (JP)**
• **FUKUMOTO Yusuke
Kadoma-shi, Osaka 571-0057 (JP)**
• **SUGIMORI Masanori
Kadoma-shi, Osaka 571-0057 (JP)**
• **YOKOYAMA Yuji
Kadoma-shi, Osaka 571-0057 (JP)**

(74) Representative: **Novagraaf International SA
Chemin de l'Echo 3
1213 Onex, Geneva (CH)**

(54) **NEGATIVE ELECTRODE FOR LITHIUM ION SECONDARY BATTERY, LITHIUM ION SECONDARY BATTERY, METHOD FOR MANUFACTURING CNT-SI PASTE, METHOD FOR MANUFACTURING NEGATIVE ELECTRODE FOR LITHIUM ION SECONDARY BATTERY, AND METHOD FOR MANUFACTURING LITHIUM ION SECONDARY BATTERY**

(57)    This negative electrode for a lithium ion secondary battery is characterized by comprising a negative electrode mixture layer containing a carbon-based negative electrode active material, a Si-based negative electrode active material, and carbon nanotubes, wherein when 100 is the ratio at which the carbon nanotubes coat the surface of the Si-based negative electrode active material, the ratio at which the carbon nanotubes coat the surface of the carbon-based negative electrode active material is at least 20 but no higher than 50.

EP 4 300 621 A1

**Description**

TECHNICAL FIELD

The present disclosure relates to a negative electrode for a lithium ion secondary battery, a lithium ion secondary battery, a method for manufacturing a CNT-Si paste, a method for manufacturing a negative electrode for a lithium ion secondary battery, and a method for manufacturing a lithium ion secondary battery.

BACKGROUND

Carbon nanotubes have attracted attention as a conductive agent included in an electrode of a lithium ion secondary battery. Carbon nanotubes can greatly improve the conductivity at a smaller content than a conventional conductive agent such as acetylene black.

As a negative electrode active material of a lithium ion secondary battery, Si-based negative electrode active materials have attracted attention. Si-based negative electrode active materials can achieve a higher battery capacity than carbon-based negative electrode active materials.

For example, Patent Literature 1 to Patent Literature 3 disclose a technique of covering a surface of a Si-based negative electrode active material with carbon nanotubes by a dry method to improve the conductivity of the Si-based negative electrode active material.

CITATION LIST

PATENT LITERATURE

Patent Literature 1: JP 2016-533626 A
Patent Literature 2: JP 2011-198614 A
Patent Literature 3: JP 2004-356078 A

SUMMARY

TECHNICAL PROBLEM

A lithium ion secondary battery using a Si-based negative electrode active material has a problem that the charge-discharge cycle characteristics are likely to deteriorate. Therefore, it can be considered to use a negative electrode active material obtained by mixing a Si-based negative electrode active material and a carbon-based negative electrode active material having good charge-discharge cycle characteristics. However, in this mixture, the conductivity between the Si-based negative electrode active material and the carbon-based negative electrode active material is low, and therefore the charge-discharge cycle characteristics are not improved unless a large amount of carbon nanotubes are added.

Therefore, an object of the present disclosure is to provide a negative electrode for a lithium ion secondary battery, a lithium ion secondary battery, a method for manufacturing a CNT-Si paste, a method for manufacturing a negative electrode for a lithium ion secondary battery, and a method for manufacturing a lithium ion secondary battery that are capable of suppressing deterioration of the charge-discharge cycle characteristics while the amount of carbon nanotubes added is restrained.

SOLUTION TO PROBLEM

A negative electrode for a lithium ion secondary battery, as an aspect of the present disclosure, includes a negative electrode mixture layer including a carbon-based negative electrode active material, a Si-based negative electrode active material, and carbon nanotubes, and when a coverage of a surface of the Si-based negative electrode active material with the carbon nanotubes is regarded as 100, a coverage of a surface of the carbon-based negative electrode active material with the carbon nanotubes is greater than or equal to 20 and less than or equal to 50.

A lithium ion secondary battery as an aspect of the present disclosure includes the negative electrode for a lithium ion secondary battery.

A method for manufacturing a CNT-Si paste, as an aspect of the present disclosure, includes a dispersion step of subjecting a mixed liquid containing carbon nanotubes, a Si-based negative electrode active material, a dispersant, and a dispersion medium to a dispersion treatment to cover the Si-based negative electrode active material with the carbon nanotubes.

A method for manufacturing a negative electrode for a lithium ion secondary battery, as an aspect of the present disclosure, includes a negative electrode mixture paste preparation step of kneading a carbon-based negative electrode active material and a CNT-Si paste obtained by the method for manufacturing a CNT-Si paste to prepare a negative electrode mixture paste, and an application step of applying the negative electrode mixture paste to a negative electrode current collector.

A method for manufacturing a lithium ion secondary battery, as an aspect of the present disclosure, includes using a negative electrode for a lithium ion secondary battery, obtained by the method for manufacturing a negative electrode for a lithium ion secondary battery, to manufacture a lithium ion secondary battery.

ADVANTAGEOUS EFFECTS OF INVENTION

According to the present disclosure, it is possible to suppress deterioration of charge-discharge cycle characteristics while the amount of carbon nanotubes added is restrained.

BRIEF DESCRIPTION OF DRAWINGS

FIG. 1 is a sectional view of a lithium ion secondary battery of an example of an embodiment.
FIG. 2 is a sectional view of a negative electrode according to an embodiment.

DESCRIPTION OF EMBODIMENTS

(Lithium Ion Secondary Battery)

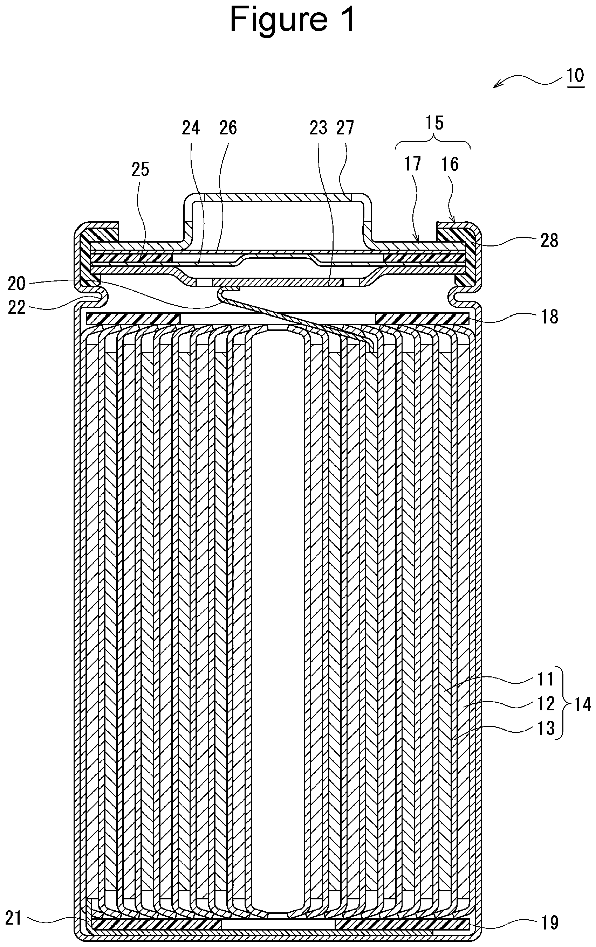

FIG. 1 is a sectional view of a lithium ion secondary battery of an example of an embodiment. A lithium ion secondary battery 10 shown in FIG. 1 includes a wound electrode assembly 14 in which a positive electrode 11 and a negative electrode 12 are wound with a separator 13 interposed therebetween, an electrolyte, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (laminated batteries) formed by lamination with a resin sheet.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side part of the case body 16 protrudes inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central parts, and the insulating member 25 is interposed between the circumferential parts of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

In the lithium ion secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, the separator 13, and the electrolyte will be described in detail.

The positive electrode 11 includes, for example, a positive electrode current collector and a positive electrode mixture layer disposed on the positive electrode current collector. As the positive electrode current collector, positive electrode current collectors commonly used in the field of lithium ion secondary batteries can be used, and examples of the positive electrode current collector include sheets and foils containing stainless steel, aluminum, an aluminum alloy, titanium, or the like. The sheets may be a porous body. Examples of the porous body include foam bodies, woven fabrics, and nonwoven fabrics. The thickness of the sheets and the foils is not particularly limited, and is, for example, greater than or equal to 1 and less than or equal to 500 $\mu$m.

The positive electrode mixture layer can contain a conventionally known positive electrode active material, a conductive agent, a binder, and the like.

Examples of the positive electrode active material include olivine-type lithium salts such as $LiFePO_4$, chalcogen compounds such as titanium disulfide and molybdenum disulfide, manganese dioxide, and conventional lithium-containing composite metal oxides. Examples of the conventional lithium-containing composite metal oxides include metal oxides containing lithium and a transition metal and metal oxides containing lithium and a transition metal that is partially substituted with a different element. Here, examples of the different element include Na, Mg, Sc, Y, Mn, Fe, Co, Ni, Cu, Zn, Al, Cr, Pb, Sb, and B, and Mn, Al, Co, Ni, Mg, and the like are preferable. One kind of the different element may be used, or greater than or equal to two kinds of the different elements may be used.

Specific examples of the lithium-containing composite metal oxides include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (in each chemical formula, M represents, for example, at least one element selected from the group consisting of Na, Mg, Sc, Y, Mn, Fe, Co, Ni, Cu, Zn, Al, Cr, Pb, Sb, V, and B, and x = 0 to 1.2, y = 0 to 0.9, z = 2.0 to 2.3).

Examples of the conductive agent include carbon black, graphite, carbon fibers, and metal fibers. Examples of the carbon black include acetylene black, Ketjenblack, channel black, furnace black, lamp black, and thermal black. The conductive agents can be used singly or in combination of greater than or equal to two kinds thereof.

As the binder, for example, polyethylene, polypropylene, a fluorine-based binder, rubber particles, an acryl-based polymer, a vinyl-based polymer, or the like can be used. Examples of the fluorine-based binder include polytetrafluoroethylene (PTFE), polyvinylidene fluoride (PVDF), a tetrafluoroethylene-hexafluoropropylene copolymer (FEP), and a vinylidene fluoride-hexafluoropropylene copolymer. The binders can be used singly or in combination of greater than or equal to two kinds thereof.

As the separator 13, for example, a microporous film composed of a polymer material is used. Examples of the polymer material include polyethylene, polypropylene, polyvinylidene fluoride, polyvinylidene chloride, polyacrylonitrile, polyacrylamide, polytetrafluoroethylene, polysulfone, polyethersulfone, polycarbonate, polyamides, polyimides, polyethers (such as polyethylene oxide and polypropylene oxide), celluloses (such as carboxymethyl cellulose and hydroxypropyl cellulose), poly(meth)acrylic acid, and poly(meth)acrylic acid ester. These polymer materials can be used singly or in combination of greater than or equal to two kinds thereof. A multilayer film obtained by superimposing these microporous films can also be used. The microporous film has a thickness, for example, greater than or equal to 15 $\mu$m and less than or equal to 30 $\mu$m.

The electrolyte contains, for example, a non-aqueous solvent and an electrolyte salt. The electrolyte is not limited to a liquid electrolyte, and may be a solid electrolyte in which a gel polymer or the like is used.

Examples of the non-aqueous solvent include cyclic carbonates and chain carbonates. Examples of the cyclic carbonates include ethylene carbonate, propylene carbonate, and butylene carbonate. Examples of the chain carbonates include dimethyl carbonate, diethyl carbonate, and ethyl methyl carbonate.

Examples of the electrolyte salt include $LiPF_6$, $LiBF_4$, $LiClO_4$, $LiAsF_6$, $LiCF_3SO_3$, $LiN(SO_2CF_3)_2$, $LiN(SO_2C_2F_5)_2$, and $LiC(SO_2CF_3)_3$. These electrolyte salts may be used singly or in combination of greater than or equal to two kinds thereof.

(Negative Electrode)

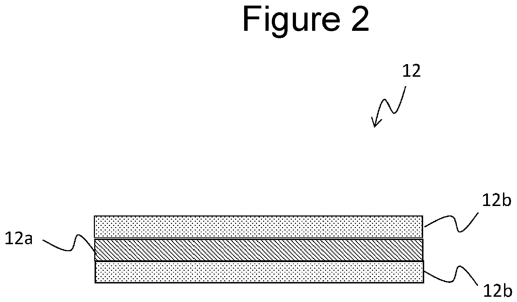

FIG. 2 is a sectional view of a negative electrode according to an embodiment. As shown in FIG. 2, a negative electrode 12 includes a negative electrode current collector 12a and a negative electrode mixture layer 12b disposed on the negative electrode current collector 12a. The negative electrode mixture layer 12b may be disposed on both surfaces of the negative electrode current collector 12a as shown in FIG. 2, or may be disposed on only one surface.

As the negative electrode current collector 12a, negative electrode current collectors commonly used in the field of lithium ion secondary batteries can be used, and examples of the negative electrode current collector 12a include sheets and foils containing copper, nickel, or a noble metal. The sheets may be a porous body. Examples of the porous body include foam bodies, woven fabrics, and nonwoven fabrics. The thickness of the sheets and the foils is not particularly limited, and is, for example, greater than or equal to 1 and less than or equal to 100 μm.

The negative electrode mixture layer 12b includes a carbon-based negative electrode active material, a Si-based negative electrode active material, and carbon nanotubes.

The carbon nanotubes cover surfaces of the carbon-based negative electrode active material and the Si-based negative electrode active material. However, more carbon nanotubes are present on the Si-based negative electrode active material than on the carbon-based negative electrode active material. The carbon-based negative electrode active material is a material having higher conductivity than the Si-based negative electrode active material, and therefore even if the amount of carbon nanotubes adhering to the carbon-based negative electrode active material is small, conductivity between the Si-based negative electrode active material and the carbon-based negative electrode active material can be ensured, so that deterioration of charge-discharge cycle characteristics of the battery can be suppressed. Specifically, when the coverage of the surface of the Si-based negative electrode active material with the carbon nanotubes is regarded as 100, the coverage of the surface of the carbon-based negative electrode active material with the carbon nanotubes is preferably greater than or equal to 20 and less than or equal to 50.

The coverage is determined as follows. The carrier surface (the surface of the carbon-based negative electrode active material or the surface of the Si-based negative electrode active material) and the carbon nanotubes covering the carrier surface were distinguished as the region A and the region B, respectively, by energy dispersive X-ray spectrometry (SEM-EDX), and the ratio of the area of the region B to the total area of the region A and the region B is calculated to determine the coverage.

As the carbon-based negative electrode active material, carbon-based negative electrode active materials used in the field of lithium ion secondary batteries can be used, and examples of the carbon-based negative electrode active material include artificial graphite such as massive artificial graphite (MAG) and graphitized mesophase-carbon microbead (MCMB), natural graphite such as flake graphite, massive graphite, and amorphous graphite, hard carbon, soft carbon, and activated carbon.

The Si-based negative electrode active material is not particularly limited as long as it can reversibly occlude and release lithium ions, and examples of the Si-based negative electrode active material include Si particles, alloy particles containing Si, and composite particles containing Si. These may be used singly, or greater than or equal to two kinds of them may be used in combination. Examples of the alloy particles containing Si include alloys containing Si and a metal selected from alkali metals, alkaline earth metals, transition metals, rare earth metals, and combinations thereof. The composite particles containing Si include, for example, a lithium ion conductive phase and Si particles dispersed in the lithium ion conductive phase. The lithium ion conductive phase is, for example, at least one selected from a silicon oxide phase, a silicate phase, and a carbon phase.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among the silicate phases, a silicate phase including lithium (hereinafter, sometimes referred to as lithium silicate phase) is preferable from the viewpoints of high lithium ion conductivity and the like.

The lithium silicate phase is represented by, for example, the formula: $Li_{2z}SiO_{2+z}$ ($0 < z < 2$). From the viewpoints of stability, ease of production, lithium ion conductivity, and the like, z preferably satisfies the relation of $0 < z < 1$, and more preferably $z = 1/2$.

The composite particles in which Si particles are dispersed in a silicon oxide phase is represented by, for example, a general formula $SiO_x$ (in which x is preferably in the range of $0 < x < 2$, and more preferably in the range of $0.5 \le x \le 1.6$). The composite particles in which Si particles are dispersed in a carbon phase is represented by, for example, a general formula $Si_xC1_y$ (in which x and y are preferably in the ranges of $0 < x \le 1$ and $0 < y < 1$, and more preferably in the ranges of $0.3 \le x \le 0.45$ and $0.7 \le y \le 0.55$).

Examples of the carbon nanotubes include single-walled carbon nanotubes, double-walled carbon nanotubes, and multi-walled carbon nanotubes. Among them, for example, single-walled carbon nanotubes are preferable from the viewpoint that deterioration of charge-discharge cycle characteristics of a battery can be further suppressed. Note that a single-walled carbon nanotube (SWCNT) is a carbon nanostructure in which one graphene sheet forms one cylindrical shape, a double-walled carbon nanotube is a carbon nanostructure in which two graphene sheets are concentrically layered to form one cylindrical shape, and a multi-walled carbon nanotube is a carbon nanostructure in which greater than or equal to three graphene sheets are concentrically layered to form one cylindrical shape. The term "graphene sheet" refers to a layer in which a carbon atom in an sp2 hybrid orbital forming a crystal of graphite is located at an apex of a regular hexagon. The shape of the carbon nanotube is not limited. Examples of the shape include various forms including needle shapes, cylindrical tube shapes, fishbone shapes (fishbone or cup-stacked type), platelets, and coil shapes.

The carbon nanotubes are to have an average length of greater than or equal to 5.0 μm and less than or equal to 10 μm, for example, from the viewpoints of conductivity and the like. The carbon nanotubes are to have an average bundle diameter of greater than or equal to 0.1 μm and less than or equal to 1 μm, for example, from the viewpoints of conductivity and the like. Here, the average length of the carbon nanotubes is determined by measuring the lengths of 10 carbon nanotubes using a scanning electron microscope (SEM) and calculating the average of the lengths. The average bundle diameter of the carbon nanotubes is determined by measuring the bundle diameters of 10 carbon nanotubes using a SEM or a transmission electron microscope (TEM) and calculating the average of the bundle diameters.

The content of the carbon nanotubes is to be greater than or equal to 0.004 mass% and less than or equal to 0.008 mass% based on the total amount of the negative electrode mixture layer 12b, for example, from the viewpoints of suppressing deterioration of charge-discharge cycle characteristics, and the like.

The negative electrode mixture layer 12b may include various additives such as a dispersant and a binder.

The dispersant adjusts dispersibility of a solid content such as carbon nanotubes contained in a paste described below, and examples of the dispersant include conventionally known thickeners such as carboxymethyl cellulose and its salts (hereinafter, sometimes referred to as CMC and CMC salts), polyethylene glycol, and polyethylene oxide, and anionic, cationic, nonionic, and amphoteric surfactants. As the dispersant, CMC and CMC salts are preferable, for example, from the viewpoint of having a function as a binder. Examples of the CMC salt include an ammonium salt, a sodium salt, a potassium salt, and a lithium salt.

As the binder, for example, polyethylene, polypropylene, a fluorine-based binder, rubber particles, an acryl-based polymer, a vinyl-based polymer, or the like can be used. Examples of the fluorine-based binder include polytetrafluoroethylene (PTFE), polyvinylidene fluoride (PVDF), a tetrafluoroethylene-hexafluoropropylene copolymer (FEP), and a vinylidene fluoride-hexafluoropropylene copolymer. Examples of the rubber particles include acrylic rubber particles, styrene-butadiene rubber (SBR) particles, and acrylonitrile rubber particles.

The negative electrode mixture layer 12b may include a carbon material such as carbon black (CB), acetylene black (AB), or Ketjenblack as a conductive agent.

[Method for Manufacturing CNT-Si Paste]

The method for manufacturing a CNT-Si paste includes a dispersion step of subjecting a mixed liquid containing carbon nanotubes, a Si-based negative electrode active material, a dispersant, and a dispersion medium to a dispersion treatment to cover the Si-based negative electrode active material with the carbon nanotubes. The method for manufacturing a CNT-Si paste desirably includes a preliminary step of mixing the carbon nanotubes, the dispersant, and the dispersion medium to obtain a CNT-containing liquid before the dispersion step.

(Preliminary Step)

Before the dispersion step, carbon nanotubes, a dispersant, and a dispersion medium are mixed to obtain a paste of a CNT-containing liquid in which the carbon nanotubes are dispersed in the dispersion medium. In the subsequent dispersion step, a mixed liquid containing the CNT-containing liquid prepared in advance and a Si-based negative electrode active material is subjected to a dispersion treatment. In the case of a dispersion treatment using a CNT-containing liquid prepared in advance as described above, the surface of the Si-based negative electrode active material can be covered with the carbon nanotubes more efficiently than in the case of a dispersion treatment in which carbon nanotubes and a Si-based negative electrode active material are added to a dispersion medium.

The dispersion medium is desirably water from the viewpoints of, for example, ease of recovery during drying and environmental compatibility, but may be an organic solvent or the like. Examples of the water include, and are not particularly limited to, ultrapure water, pure water, and industrial water, but in the case of selecting a grade of water without limitation due to the treatment cost and the amount of water to be used, water belonging to the class A1 specified in Japanese Industrial Standards is generally used. The carbon nanotubes and the dispersant are as described above.

In the preliminary step, for example, an in-line mixer or the like is preferably used for mixing the carbon nanotubes, the dispersant, and the dispersion medium. As the in-line mixer, for example, magic LAB manufactured by IKA can be used.

(Dispersion Step)

A mixed liquid obtained by adding a Si-based negative electrode active material to the CNT-containing liquid obtained in the preliminary step is subjected to a dispersion treatment to cover the Si-based negative electrode active material with the carbon nanotubes. In a case without the preliminary step, a mixed liquid obtained by adding carbon nanotubes, a dispersant, and a Si-based negative electrode active material to a dispersion medium is subjected to a dispersion treatment.

The dispersion treatment in the dispersion step is preferably selected from at least one of a dispersion treatment by shear stirring, a dispersion treatment by a bead mill, or a dispersion treatment by an ultrasonic wave. Among these treatments, the dispersion treatment by shear stirring is preferable from the viewpoint that the carbon nanotubes can be highly dispersed by loosening a bundle in which a plurality of carbon nanotubes are entangled with each other. Thus, the surface of the Si-based negative electrode active material can be efficiently covered with the carbon nanotubes. From the viewpoint that a bundle of carbon nanotubes can be efficiently loosened, the mixed liquid is preferably sheared and stirred at a shear force (1/s), calculated from the flow rate of the paste and the clearance, of greater than or equal to 100000 (1/s). The shear stirring is desirably performed using a high-pressure homogenizer. That is, the shear stirring of the mixed liquid is preferably performed by passing the mixed liquid through a high-pressure homogenizer. In the high-pressure homogenizer, the average bundle diameter of the carbon nanotubes can be adjusted according to the number of passes of the mixed liquid, so that the dispersibility of the carbon nanotubes and the coverage of the Si-based negative electrode active material with the carbon nanotubes can be adjusted. The number of passes of the mixed liquid through the high-pressure homogenizer is preferably greater than or equal to 1 and less than or equal to 50 from the viewpoints of, for example, enhancing the dispersibility of the carbon nanotubes and enhancing the coverage of the Si-based negative electrode active material with the carbon nanotubes.

Thus, a CNT-Si dispersion paste is obtained in which the dispersant and the Si-based negative electrode active material covered with the carbon nanotubes are dispersed in the dispersion medium. The Si-based negative electrode active material covered with the carbon nanotubes of the present embodiment has a lower adhesion force between the Si-based negative electrode active material and a carbon nanotube than in the case of a conventional dry method. Therefore, in a kneading treatment performed in the method for manufacturing a negative electrode for a lithium ion secondary battery described below, the carbon nanotubes adhering to the surface of the Si-based negative electrode active material are partly peeled off and can be adhered to the surface of a carbon-based negative electrode active material.

[Method for Manufacturing Negative Electrode for Lithium Ion Secondary Battery]

The method for manufacturing a negative electrode for a lithium ion secondary battery includes a negative electrode mixture paste preparation step of kneading a carbon-based negative electrode active material and a CNT-Si paste obtained by the method for manufacturing a CNT-Si paste to prepare a negative electrode mixture paste and an application step of applying the negative electrode mixture paste to a negative electrode current collector. Furthermore, the method for manufacturing a negative electrode for a lithium ion secondary battery preferably includes a preliminary kneading step of kneading the carbon-based negative electrode active material, a binder, and a dispersion medium to prepare a carbon-based negative electrode active material paste before the negative electrode mixture paste preparation step.

(Preliminary Kneading Step)

A carbon-based negative electrode active material, a binder, and a dispersion medium are kneaded to prepare a carbon-based negative electrode active material paste before the negative electrode mixture paste preparation step. In the subsequent negative electrode mixture paste preparation step, the carbon-based negative electrode active material paste prepared in advance and a CNT-Si paste are kneaded. In the case of using the carbon-based negative electrode active material paste prepared in advance as described above, the dispersibility of the carbon-based negative electrode active material and the Si-based negative electrode active material can be enhanced as compared with the case of adding a carbon-based negative electrode active material powder to a CNT-Si paste and kneading the mixture.

As the dispersion medium, water is preferable as described above. The dispersion medium may be added a plurality of times during the preliminary kneading step. The binder is as described above.

A known kneader is to be used for kneading in the preliminary kneading step and the negative electrode mixture paste preparation step described below. For example, a batch kneader can be used such as a Banbury mixer or a pressure kneader in which two rotor blades in a container rotate, or a twin-screw planetary mixer/kneader in which two blades simultaneously rotate and revolve. Alternatively, a kneader may be used such as a single-screw kneading extruder, a continuous screw kneader such as a twin-screw kneading extruder, a spiral mixer such as a kneader with a rotor having a pin, or a Filmix mixer in which a slurry is confined in a high-speed rotating thin film by centrifugal force and kneaded.

(Negative Electrode Mixture Paste Preparation Step)

The carbon-based negative electrode active material paste obtained by the preliminary kneading step and a CNT-Si paste obtained by the method for manufacturing a CNT-Si paste are kneaded with a kneader to prepare a negative electrode mixture paste. Preferably, the carbon-based negative electrode active material paste obtained by the preliminary kneading step, a CNT-Si paste obtained by the method for manufacturing a CNT-Si paste, and an emulsion binder are kneaded to prepare a negative electrode mixture paste. In a case without the preliminary kneading step, a carbon-based negative electrode mixture, a CNT-Si paste, an optional binder, and an optional dispersion medium are kneaded with a kneader to prepare a negative electrode mixture paste.

Due to the kneading, the carbon nanotubes adhering to the surface of the Si-based negative electrode active material are partly peeled off and adhered to the surface of the carbon-based negative electrode active material. In the kneading of the paste, a large shear force is not applied, and therefore the amount of carbon nanotubes transferred from the Si-based negative electrode active material to the carbon-based negative electrode active material is limited. The kneading is preferably performed to satisfy a condition, which depends on kneading conditions such as a kneading time and a kneading temperature, such that when the coverage of the surface of the Si-based negative electrode active material with the carbon nanotubes is regarded as 100, the coverage of the surface of the carbon-based negative electrode active material with the carbon nanotubes is greater than or equal to 20 and less than or equal to 50.

Even if the amount of carbon nanotubes added is small, conductivity between the Si-based negative electrode active material and the carbon-based negative electrode active material can be ensured by producing a negative electrode using such a negative electrode mixture paste, so that deterioration of charge-discharge cycle characteristics can be suppressed while the amount of carbon nanotubes added is restrained. In the case of a Si-based negative electrode active material covered with carbon nanotubes obtained by a conventional dry method, few carbon nanotubes are transferred to a carbon-based negative electrode active material at the time of kneading, and therefore conductivity between the Si-based negative electrode active material and the carbon-based negative electrode active material cannot be ensured unless carbon nanotubes are added at the time of kneading or the like. In the case of kneading carbon nanotubes (or a carbon nanotube-containing paste), a Si-based negative electrode active material, and a carbon-based negative electrode active material, both the Si-based negative electrode active material and the carbon-based negative electrode active material are uniformly covered with the carbon nanotubes, and therefore it is necessary to add a large amount of carbon nanotubes in order to ensure conductivity between the Si-based negative electrode active material and the carbon-based negative electrode active material.

Examples of a usable emulsion binder include, in addition to SBR, polyacrylic acid, polyvinyl pyrrolidone, and polyvinyl alcohol.

(Application Step)

The negative electrode mixture paste obtained by the negative electrode mixture paste preparation step is applied to a negative electrode current collector. The negative electrode mixture paste can be applied to the surface of the negative electrode current collector using, for example, a slit die coater, a reverse roll coater, a lip coater, a blade coater, a knife coater, a gravure coater, or a dip coater. The negative electrode mixture paste applied to the negative electrode current collector may be dried in a manner similar to that in natural drying, but is desirably dried at a temperature higher than or equal to 100°C and lower than or equal to 200°C for 10 minutes to 1 hour in consideration of productivity. A film obtained by drying the negative electrode mixture paste may be rolled. The rolling is performed several times at a predetermined linear pressure, for example, with a roll press machine until the film has a predetermined thickness.

Such a series of steps provide a negative electrode for a lithium ion secondary battery in which a negative electrode mixture layer is formed on a negative electrode current collector. The obtained negative electrode for a lithium ion secondary battery may be cut and processed into a predetermined size according to the battery size. Then, the above-described lithium ion secondary battery can be manufactured using the negative electrode for a lithium ion secondary battery.

EXAMPLES

Hereinafter, the present disclosure will be further described with reference to Examples. The present disclosure, however, is not limited to these Examples.

<Example 1>

[Production of CNT-Si Paste]

Carbon nanotubes having a diameter, that is, D50 in a particle size distribution measured by a laser diffraction method (Microtrac MT3000), of 700 $\mu$m, carboxymethyl cellulose (CMC) as a dispersant, and water as a dispersion medium were mixed at a mass ratio of 99 : 0.6 : 0.4 for 5 minutes using an in-line mixer (IKA magic LAB) to prepare a CNT-containing liquid. The carbon nanotubes in the obtained CNT-containing liquid had a diameter, that is, D50 in a particle size distribution measured by a laser diffraction method (Microtrac MT3000), of 145 $\mu$m.

Next, a Si-based negative electrode active material was prepared in which Si fine particles were dispersed in a lithium silicate phase represented by $Li_{2z}SiO_{2+z}$ (0 < z < 2). Then, the CNT-containing solution and the Si-based negative electrode active material were mixed at a mass ratio of 1 : 40 together with water so as to obtain a solid content concentration of 50 mass%, and the resulting mixed liquid was passed through a valve type high-pressure homogenizer (ECONIZER LABO-02 manufactured by SANMARU MACHINERY CO., LTD.) twice (number of passes: 2) at a flow rate of 14 L/h under a pressure of 30 Pa to perform a dispersion treatment, and thus a CNT-Si paste was prepared.

[Production of Negative Electrode]

Graphite, water as a dispersion medium, and CMC as a binder were kneaded at a mass ratio of 100 : 100 : 0.98 for 120 minutes using a kneader (HIVIS MIX Model 2P-1 manufactured by PRIMIX Corporation) to prepare a graphite paste, and then the CNT-Si paste and SBR as an emulsion binder were added to the graphite paste at a mass ratio of 10 : 1.3 with respect to 100 of the graphite paste, and then the mixture was kneaded for 5 minutes to prepare a negative electrode slurry.

The negative electrode slurry was applied to both surfaces of a negative electrode core member made of a copper foil, and the applied film was dried, then rolled with a roller, and cut into a predetermined electrode size to produce a negative electrode. The content of the carbon nanotubes was 0.004 mass% based on the total amount of the negative electrode mixture layer. When the coverage of the Si-based negative electrode active material with the carbon nanotubes was regarded as 100, the coverage of the graphite with the carbon nanotubes was 20. The carbon nanotubes had an average bundle diameter of 0.9 $\mu$m.

[Production of Positive Electrode]

An NCA (Ni-Al-Co)-based lithium-transition metal composite oxide containing 88 mass% of Ni was used as a positive electrode active material. The positive electrode active material, carbon nanotubes, and polyvinylidene fluoride (PVdF) were mixed at a mass ratio of 100 : 0.4 : 0.8, and then an appropriate amount of NMP was added to prepare a positive electrode mixture paste. Next, the positive electrode mixture paste was applied to both surfaces of a positive electrode core member made of an aluminum foil, and the applied film was dried, then rolled with a roller, and cut into a predetermined electrode size to produce a positive electrode.

[Preparation of Non-aqueous Electrolyte]

Ethylene carbonate (EC), ethyl methyl carbonate (EMC), and dimethyl carbonate (DMC) were mixed at a volume ratio of 3 : 3 : 4. In the resulting mixed solvent, lithium hexafluorophosphate (LiPF$_6$) was dissolved so that the concentration of LiPF$_6$ was 1.2 mol/L, and thus a non-aqueous electrolyte was prepared.

[Production of Test Cell]

The positive electrode and the negative electrode were spirally wound with a separator made of polyolefin interposed therebetween, and then the resulting product was press-molded in the radial direction to produce a flat wound electrode assembly. The electrode assembly was housed in an exterior housing body formed of an aluminum laminate sheet, the non-aqueous electrolyte was injected, and then an opening of the exterior housing body was sealed to obtain a test cell.

[Cycle Test]

The test cell was charged at a constant current of 0.5 C under a temperature environment of 25°C until the battery voltage reached 4.2 V, charged at a constant voltage of 4.2 V until the current value reached 0.05 C, and then discharged at a constant current of 0.7 C until the battery voltage reached 2.5 V This procedure was regarded as 1 cycle. The cycle was repeated 200 times while a rest for 10 minutes was taken after end of each cycle. The discharge capacity at the 1st cycle and the discharge capacity at the 200th cycle in the cycle test were determined, and the capacity maintenance rate was calculated with the following formula.

$$\text{Capacity maintenance rate (\%)} = (\text{discharge capacity at 200th cycle} \div \text{discharge capacity at 1st cycle}) \times 100$$

<Example 2>

A test cell was produced in the same manner as in Example 1 except that the number of passes in the dispersion treatment was set to 20, and the above-described cycle test was performed. When the coverage of the Si-based negative electrode active material with the carbon nanotubes was regarded as 100, the coverage of the graphite with the carbon nanotubes was 20. The carbon nanotubes had an average bundle diameter of 0.6 $\mu$m.

<Example 3>

A test cell was produced in the same manner as in Example 1 except that the number of passes in the dispersion treatment was set to 50, and the above-described cycle test was performed. When the coverage of the Si-based negative electrode active material with the carbon nanotubes was regarded as 100, the coverage of the graphite with the carbon nanotubes was 20. The carbon nanotubes had an average bundle diameter of 0.1 $\mu$m.

<Example 4>

A test cell was produced in the same manner as in Example 1 except that the mixing time with the in-line mixer was set to 20 minutes in preparation of the CNT-containing liquid, and the above-described cycle test was performed. The carbon nanotubes in the CNT-containing liquid had an average diameter, in a particle size distribution measured by a laser diffraction method, of 100 $\mu$m. When the coverage of the Si-based negative electrode active material with the carbon nanotubes was regarded as 100, the coverage of the graphite with the carbon nanotubes was 20. The carbon nanotubes had an average bundle diameter of 0.7 $\mu$m.

<Example 5>

A test cell was produced in the same manner as in Example 1 except that the mixing time with the in-line mixer was set to 60 minutes in preparation of the CNT-containing liquid, and the above-described cycle test was performed. The carbon nanotubes in the CNT-containing liquid had an average diameter, in a particle size distribution measured by a laser diffraction method, of 70 $\mu$m. When the coverage of the Si-based negative electrode active material with the carbon nanotubes was regarded as 100, the coverage of the graphite with the carbon nanotubes was 20. The carbon nanotubes had an average bundle diameter of 0.4 $\mu$m.

<Example 6>

A test cell was produced in the same manner as in Example 1 except that the kneading time in preparation of the graphite paste was set to 30 minutes and that the amount of carbon nanotubes added was changed so that the content of the carbon nanotubes was 0.008 mass% based on the total amount of the negative electrode mixture layer, and the above-described cycle test was performed. When the coverage of the Si-based negative electrode active material with the carbon nanotubes was regarded as 100, the coverage of the graphite with the carbon nanotubes was 40. The carbon nanotubes had an average bundle diameter of 0.9 $\mu$m.

<Example 7>

A test cell was produced in the same manner as in Example 1 except that the kneading time in preparation of the graphite paste was set to 60 minutes and that the amount of carbon nanotubes added was changed so that the content of the carbon nanotubes was 0.01 mass% based on the total amount of the negative electrode mixture layer, and the above-described cycle test was performed. When the coverage of the Si-based negative electrode active material with the carbon nanotubes was regarded as 100, the coverage of the graphite with the carbon nanotubes was 50. The carbon nanotubes had an average bundle diameter of 0.9 $\mu$m.

<Comparative Example 1>

[Production of CNT Paste]

Carbon nanotubes having a diameter, in a particle size distribution measured by a laser diffraction method, of 700 $\mu$m, carboxymethyl cellulose (CMC) as a dispersant, and water as a dispersion medium were mixed at a mass ratio of 99 : 0.6 : 0.4 for 5 minutes using an in-line mixer (IKA magic LAB) to prepare a CNT-containing liquid. The carbon nanotubes in the CNT-containing liquid had a diameter, in a particle size distribution measured by a laser diffraction

method, of 145 μm.

Next, the CNT-containing solution was passed through a valve type high-pressure homogenizer (ECONIZER LABO-02 manufactured by SANMARU MACHINERY CO., LTD.) 20 times (number of passes: 20) at a flow rate of 14 L/h under a pressure of 80 Pa to perform a dispersion treatment, and thus a CNT paste was prepared.

[Production of Negative Electrode]

The CNT paste, graphite, a Si-based negative electrode active material, water as a dispersion medium, and CMC as a binder were kneaded at a mass ratio of 10 : 100 : 10 : 100 : 0.97 for 90 minutes using a kneader (HIVIS MIX Model 2P-1 manufactured by PRIMIX Corporation) to prepare a paste, and then SBR as an emulsion binder was added to the paste at a mass ratio of 2.5 with respect to 100 of the paste, and then the mixture was kneaded for 10 minutes to prepare a negative electrode slurry.

The negative electrode slurry was applied to both surfaces of a negative electrode core member made of a copper foil, and the applied film was dried, then rolled with a roller, and cut into a predetermined electrode size to produce a negative electrode. The content of the carbon nanotubes was 0.02 mass% based on the total amount of the negative electrode mixture layer. When the coverage of the Si-based negative electrode active material with the carbon nanotubes was regarded as 100, the coverage of the graphite with the carbon nanotubes was 100. The carbon nanotubes had an average bundle diameter of 0.05 μm.

A test cell was produced in the same manner as in Example 1 except that this negative electrode was used, and the above-described cycle test was performed.

<Comparative Example 2>

To water, carbon nanotubes and a Si-based negative electrode active material were added at a mass ratio of 0.2 : 100, media balls were put in the resulting liquid, and the mixture was mixed and then dried. The obtained powder was pulverized to obtain a Si-CNT powder in which the surface of the Si-based negative electrode active material was covered with the carbon nanotubes.

The Si-CNT powder, graphite, water as a dispersion medium, and CMC as a binder were kneaded at a mass ratio of 10 : 100 : 100 : 0.97 for 120 minutes using a kneader (HIVIS MIX Model 2P-1 manufactured by PRIMIX Corporation) to prepare a paste, and then SBR as an emulsion binder was added to the paste at a mass ratio of 1.3 with respect to 100 of the paste, and then the mixture was kneaded for 10 minutes to prepare a negative electrode slurry.

The negative electrode slurry was applied to both surfaces of a negative electrode core member made of a copper foil, and the applied film was dried, then rolled with a roller, and cut into a predetermined electrode size to produce a negative electrode. The content of the carbon nanotubes was 0.1 mass% based on the total amount of the negative electrode mixture layer. When the coverage of the Si-based negative electrode active material with the carbon nanotubes was regarded as 100, the coverage of the graphite with the carbon nanotubes was 0. The carbon nanotubes had an average bundle diameter of 0.02 μm.

A test cell was produced in the same manner as in Example 1 except that this negative electrode was used, and the above-described cycle test was performed.

<Comparative Example 3>

Carbon nanotubes and a Si-based negative electrode active material were mixed at a mass ratio of 0.2 : 100 for 120 minutes using a hybridization dry mixer to obtain a Si-CNT powder in which the surface of the Si-based negative electrode active material was covered with the carbon nanotubes.

The Si-CNT powder, graphite, water as a dispersion medium, and CMC as a binder were kneaded at a mass ratio of 10 : 100 : 100 : 0.97 for 120 minutes using a kneader (HIVIS MIX Model 2P-1 manufactured by PRIMIX Corporation) to prepare a paste, and then SBR as an emulsion binder was added to the paste at a mass ratio of 1.3 with respect to 100 of the paste, and then the mixture was kneaded for 10 minutes to prepare a negative electrode slurry.

The negative electrode slurry was applied to both surfaces of a negative electrode core member made of a copper foil, and the applied film was dried, then rolled with a roller, and cut into a predetermined electrode size to produce a negative electrode. The content of the carbon nanotubes was 0.1 mass% based on the total amount of the negative electrode mixture layer. When the coverage of the Si-based negative electrode active material with the carbon nanotubes was regarded as 100, the coverage of the graphite with the carbon nanotubes was 0. The carbon nanotubes had an average bundle diameter of 0.02.

A test cell was produced in the same manner as in Example 1 except that this negative electrode was used, and the above-described cycle test was performed.

<Comparative Example 4>

A test cell was produced in the same manner as in Comparative Example 1 except that the content of the carbon nanotubes was set to 0.004 mass% based on the total amount of the negative electrode mixture layer, and the above-described cycle test was performed.

Table 1 describes the evaluation results of the capacity maintenance rate in Examples and Comparative Examples. The capacity maintenance rates of Examples 2 to 7 and Comparative Examples 1 to 4 are indicated by relative values with respect to the capacity maintenance rate of Example 1 regarded as 100.

[Table 1]

| | Mixing time with in-line mixer | Number of passes | Paste-kneading time | Content of CNTs | Bundle diameter of CNTs | Coverage of graphite with CNTs (relative value) | Capacity maintenance rate (relative value) |
|---|---|---|---|---|---|---|---|
| Example 1 | 5 min | 10 | 10 min | 0.004 mass% | 0.9 | 20 | 100 |
| Example 2 | 5 min | 20 | 10 min | 0.004 mass% | 0.6 | 20 | 100.5 |
| Example 3 | 5 min | 50 | 10 min | 0.004 mass% | 0.1 | 20 | 99.2 |
| Example 4 | 20 min | 10 | 10 min | 0.004 mass% | 0.7 | 20 | 100.2 |
| Example 5 | 60 min | 10 | 10 min | 0.004 mass% | 0.4 | 20 | 99.5 |
| Example 6 | 5 min | 10 | 30 min | 0.008 mass% | 0.9 | 40 | 98.5 |
| Example 7 | 5 min | 10 | 60 min | 0.01 mass% | 0.9 | 50 | 98 |
| Comparative Example 1 | 5 min | 20 | 90 min | 0.02 mass% | 0.05 | 100 | 100 |
| Comparative Example 2 | - | - | 120 min | 0.1 mass% | 0.02 | 0 | 94 |
| Comparative Example 3 | - | - | 120 min | 0.1 mass% | 0.02 | 0 | 96 |
| Comparative Example 4 | 5 min | 20 | 90 min | 0.004 mass% | 0.9 | 100 | 95 |

In all of the test cells produced with the production methods of Examples 1 to 7, the amount of carbon nanotubes added was smaller than in the test cells produced with the conventional methods of Comparative Examples 2 to 3, and deterioration of charge-discharge cycle characteristics of the battery was suppressed. The production methods of Comparative Example 1 and Comparative Example 4 are the same, and when, as in Comparative Example 1, the amount of carbon nanotubes added was large, the result of charge-discharge cycle characteristics was similar to that in Example 1. However, when, as in Comparative Example 4, the amount of carbon nanotubes added was the same as in Example 1, the effect of suppressing deterioration of charge-discharge cycle characteristics was inferior to that in Example.

REFERENCE SIGNS LIST

10      Lithium ion secondary battery
11      Positive electrode
12      Negative electrode

| 12a | Negative electrode current collector |
| 12b | Negative electrode mixture layer |
| 13 | Separator |
| 14 | Electrode assembly |
| 15 | Battery case |
| 16 | Case body |
| 17 | Sealing assembly |
| 18,19 | Insulating plate |
| 20 | Positive electrode lead |
| 21 | Negative electrode lead |
| 22 | Projecting portion |
| 23 | Filter |
| 24 | Lower vent member |
| 25 | Insulating member |
| 26 | Upper vent member |
| 27 | Cap |
| 28 | Gasket |

## Claims

1. A negative electrode for a lithium ion secondary battery, the negative electrode comprising a negative electrode mixture layer including: a carbon-based negative electrode active material; a Si-based negative electrode active material; and carbon nanotubes, wherein
   when a coverage of a surface of the Si-based negative electrode active material with the carbon nanotubes is regarded as 100, a coverage of a surface of the carbon-based negative electrode active material with the carbon nanotubes is greater than or equal to 20 and less than or equal to 50.

2. The negative electrode for a lithium ion secondary battery according to claim 1, wherein the carbon nanotubes have an average length of greater than or equal to 5 $\mu$m and less than or equal to 10 $\mu$m, and an average bundle diameter of greater than or equal to 0.1 $\mu$m and less than or equal to 1 $\mu$m.

3. The negative electrode for a lithium ion secondary battery according to claim 1 or 2, wherein a content of the carbon nanotubes is greater than or equal to 0.004 mass% and less than or equal to 0.01 mass% based on a total amount of the negative electrode mixture layer.

4. A lithium ion secondary battery comprising the negative electrode for a lithium ion secondary battery according to any one of claims 1 to 3.

5. A method for manufacturing a CNT-Si paste, the method comprising a dispersion step of subjecting a mixed liquid containing carbon nanotubes, a Si-based negative electrode active material, a dispersant, and a dispersion medium to a dispersion treatment to cover the Si-based negative electrode active material with the carbon nanotubes.

6. The method for manufacturing a CNT-Si paste according to claim 5, the method comprising a preliminary step of mixing the carbon nanotubes, the dispersant, and the dispersion medium to obtain a CNT-containing liquid before the dispersion step,
   the dispersion step including subjecting the mixed liquid to a dispersion treatment, the mixed liquid containing the CNT-containing liquid and the Si-based negative electrode active material.

7. The method for manufacturing a CNT-Si paste according to claim 5 or 6, wherein the dispersion treatment includes at least one of a dispersion treatment by shear stirring, a dispersion treatment by a bead mill, or a dispersion treatment by an ultrasonic treatment.

8. The method for manufacturing a CNT-Si paste according to claim 7, wherein the dispersion treatment is the dispersion treatment by shear stirring, and the dispersion treatment by shear stirring includes shear stirring of the mixed liquid at a shear force of greater than or equal to 100000 (1/s).

9. The method for manufacturing a CNT-Si paste according to claim 7 or 8, wherein the dispersion treatment by shear stirring is performed by passing the mixed liquid through a high-pressure homogenizer.

10. The method for manufacturing a CNT-Si paste according to any one of claims 7 to 9, wherein a number of passes of the mixed liquid through the high-pressure homogenizer is greater than or equal to 1 and less than or equal to 50.

11. A method for manufacturing a negative electrode for a lithium ion secondary battery, the method comprising:

a negative electrode mixture paste preparation step of kneading a carbon-based negative electrode active material and a CNT-Si paste obtained by the method according to any one of claims 5 to 10 to prepare a negative electrode mixture paste; and
an application step of applying the negative electrode mixture paste to a negative electrode current collector.

12. The method for manufacturing a negative electrode for a lithium ion secondary battery according to claim 11, the method comprising a preliminary kneading step of kneading the carbon-based negative electrode active material, a binder, and a dispersion medium to prepare a carbon-based negative electrode active material paste before the negative electrode mixture paste preparation step,
the negative electrode mixture paste preparation step including kneading the carbon-based negative electrode active material paste and the CNT-Si paste.

13. The method for manufacturing a negative electrode for a lithium ion secondary battery according to claim 12, wherein the negative electrode mixture paste preparation step includes kneading the carbon-based negative electrode active material paste, the CNT-Si paste, and an emulsion binder.

14. A method for manufacturing a lithium ion secondary battery, the method comprising using a negative electrode for a lithium ion secondary battery to manufacture a lithium ion secondary battery, the negative electrode obtained by the method according to any one of claims 11 to 13.

# Figure 1

# Figure 2

## INTERNATIONAL SEARCH REPORT

| International application No. |
|---|
| **PCT/JP2022/002362** |

**A.    CLASSIFICATION OF SUBJECT MATTER**

*H01M 4/133*(2010.01)i; *H01M 4/134*(2010.01)i; *H01M 4/136*(2010.01)i; *H01M 4/1393*(2010.01)i; *H01M 4/1397*(2010.01)i; *H01M 4/36*(2006.01)i; *H01M 4/58*(2010.01)i; *H01M 4/587*(2010.01)i; *H01M 4/62*(2006.01)i

FI:    H01M4/58; H01M4/62 Z; H01M4/36 C; H01M4/587; H01M4/1397; H01M4/1393; H01M4/133; H01M4/136; H01M4/134

According to International Patent Classification (IPC) or to both national classification and IPC

**B.    FIELDS SEARCHED**

Minimum documentation searched (classification system followed by classification symbols)

H01M4/133; H01M4/134; H01M4/136; H01M4/1393; H01M4/1397; H01M4/36; H01M4/58; H01M4/587; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2014-93192 A (MITSUBISHI MATERIALS CORP) 19 May 2014 (2014-05-19) fig. 1, paragraphs [0005], [0016], [0021]-[0027] | 5, 7-10 |
| Y | | 1-4, 6-14 |
| Y | JP 2004-220910 A (MITSUBISHI MATERIALS CORP) 05 August 2004 (2004-08-05) fig. 1, paragraph [0030] | 1-4, 6-14 |
| A | | 5 |
| Y | JP 2010-95797 A (KOREA INST OF SCIENCE & TECHNOLOGY) 30 April 2010 (2010-04-30) paragraph [0037] | 1-4, 11-14 |
| A | | 5-10 |
| A | WO 2020/105731 A1 (UNIV SHINSHU  ) 28 May 2020 (2020-05-28) fig. 4, paragraphs [0042]-[0047] | 1-14 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 March 2022** | **05 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/002362**

**C.    DOCUMENTS CONSIDERED TO BE RELEVANT**

| Category* | Citation of document, with indication, where appropriate, of the relevant passages | Relevant to claim No. |
|---|---|---|
| A | JP 2017-76597 A (GS ENERGY CORP) 20 April 2017 (2017-04-20) paragraphs [0078]-[0082] | 1-14 |

Form PCT/ISA/210 (second sheet) (January 2015)

INTERNATIONAL SEARCH REPORT
Information on patent family members

International application No.

**PCT/JP2022/002362**

| Patent document cited in search report | | | Publication date (day/month/year) | Patent family member(s) | | | Publication date (day/month/year) |
|---|---|---|---|---|---|---|---|
| JP | 2014-93192 | A | 19 May 2014 | (Family: none) | | | |
| JP | 2004-220910 | A | 05 August 2004 | (Family: none) | | | |
| JP | 2010-95797 | A | 30 April 2010 | US | 2010/0092868 | A1 | |
| | | | | paragraphs [0044]-[0045] | | | |
| | | | | KR | 10-2010-0041567 | A | |
| WO | 2020/105731 | A1 | 28 May 2020 | CN | 112889165 | A | |
| JP | 2017-76597 | A | 20 April 2017 | US | 2017/0110722 | A1 | |
| | | | | paragraphs [0092]-[0096] | | | |
| | | | | KR | 10-2017-0044360 | A | |

Form PCT/ISA/210 (patent family annex) (January 2015)

19

**EP 4 300 621 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016533626 A
- JP 2011198614 A
- JP 2004356078 A